# EUROPEAN PATENT APPLICATION

(11) **EP 0 530 171 A1**
(43) Date of publication of application: **03.03.1993**
(21) Application number: 92870133.3
(22) Date of filing: 28.08.1992
(51) Int. Cl.: G01C 9/20, G01C 9/06

(54) **Device for measuring an inclination and/or detecting or measuring a variation in inclination or speed**

(30) Priority: 28.08.1991 BE 9100795
(71) Applicant: SMET-AQUA, naamloze vennootschap, B-2480 Dessel (BE)
(72) Inventor: Albert, René Marcel, B-3130 Begijnendijk (BE)
(74) Representative: Debrabandere, René

(57) **Abstract**

Device for measuring an inclination and/or detecting or measuring a variation in inclination or speed, which device comprises a receptacle (1, 2; 14, 15) which is partly filled with liquid (3), characterised in that the receptacle (1, 2; 14, 15) comprises at least a pair of wall parts (2; 15) located opposite each other which let through radiation, the liquid is a liquid (3) which at least obstructs part of this radiation and the device comprises a radiation source (4) which is disposed stationary in relation to the receptacle (1, 2; 14, 15) opposite at least one of the wall parts (2; 15) and a radiation recording instrument (5) which is disposed stationary in relation to the receptacle (1, 2; 14, 15) opposite the opposite wall part (2; 15) of the receptacle (1, 2; 14, 15), which radiation recording instrument (5) gives a signal in function of the recorded radiation.

## Description

The invention relates to a device for measuring an inclination and/or detecting or measuring a variation in inclination or speed, which device comprises a receptacle which is partly filled with liquid.

By inclination here is meant the angle in relation to the horizontal, this is the perpendicular to the direction of gravity.

Under the influence of gravity the surface area of the liquid is always parallel to the horizontal, even with an inclining receptacle. This principle is among others applied in a spirit level with which deviations in relation to the horizontal can easily be determined at least with stationary and accessible objects.

With moving or difficulty accessible objects, such as among others a steerable drilling head in the ground, a spirit level can no longer be used.

The utilisation of gyroscope devices is known in such cases. With these the inclination can be accurately determined but these devices are very expensive and complicated and require much space. Other known devices are comprised of a disc-shaped housing with therein a circle sector-shaped pendulum which is equipped with magnets at its periphery, while the housing is provided with sensors installed spread out over the periphery. These devices are also rather complicated and take up much space.

Devices are also known which make use of the influence of gravity on a liquid in a receptacle. With these known devices three electrodes are mounted in the liquid. These electrodes are attached in relation to the receptacle and the conductivity between these electrodes, which is dependent upon the depth over which the electrodes are immersed in the liquid, which depth itself is dependent upon the inclination, is measured. These devices are however not very accurate.

The invention is intended to remedy these disadvantages and to provide a device of the above described type with a receptacle which is partly filled with liquid, which is very compact, of rather simple construction and permits an accurate measurement.

For this purpose the receptacle comprises at least a pair of wall parts located opposite each other which let through radiation, the liquid is a liquid which at least obstructs part of this radiation and the device comprises a radiation source which is disposed stationary in relation to the receptacle opposite at least one of the wall parts and a radiation recording instrument. which is disposed stationary in relation to the receptacle opposite the opposite wall part of the receptacle, which radiation recording instrument gives a signal in function of the recorded radiation.

In a particular embodiment of the invention the receptacle is tubular and the extremities let through radiation.

In an advantageous embodiment of the invention the radiation source is a light source and the radiation recording instrument a light recording instrument while the wall parts allowing radiation through are wall parts which let through light.

In a notable embodiment of the invention the device comprises at least two wall parts which let through radiation disposed opposite each other, two radiation sources, one opposite a wall part of each pair and two radiation recording instruments, one opposite the other wall part of each pair.

In a suitable embodiment of the invention the receptacle is formed by two parallel walls and a connecting wall which at least locally lets through radiation and connects these to each other over the entire periphery of the aforementioned walls and forms all the wall parts which let through radiation.

Other details and advantages of the invention will appear from the following description of a device for measuring an inclination and/or detecting or measuring a variation in inclination or speed according to the invention. This description is only given as an example and does not restrict the invention.

The reference figures relate to the drawings attached hereto, in which:
Figure 1 shows a schematically maintained view from above of a device according to the invention;
figure 2 shows a section according to the line II-II from figure 1;
figure 3 shows a section according to the line III-III from figure 1;
figure 4 shows a section analogue to that from figure 2 but with the device in another position;
figure 5 shows a section analogue to that from figures 2 and 4 but with the device in yet another position;
figure 6 shows a section analogue to that from figures 2, 4 and 5 but in relation to a device which is longer;
figure 7 shows a view from above with partial cut away of another embodiment of the device according to the invention;
figure 8 shows a section according to the line VIII-VIII from figure 7;
figure 9 shows a side view of a device according to the invention applied as seismograph;
figure 10 shows a section of the device according to the invention mounted in a drilling head;
figure 11 shows a schematically maintained side view of a device according to the invention, in relation to another embodiment thereof.

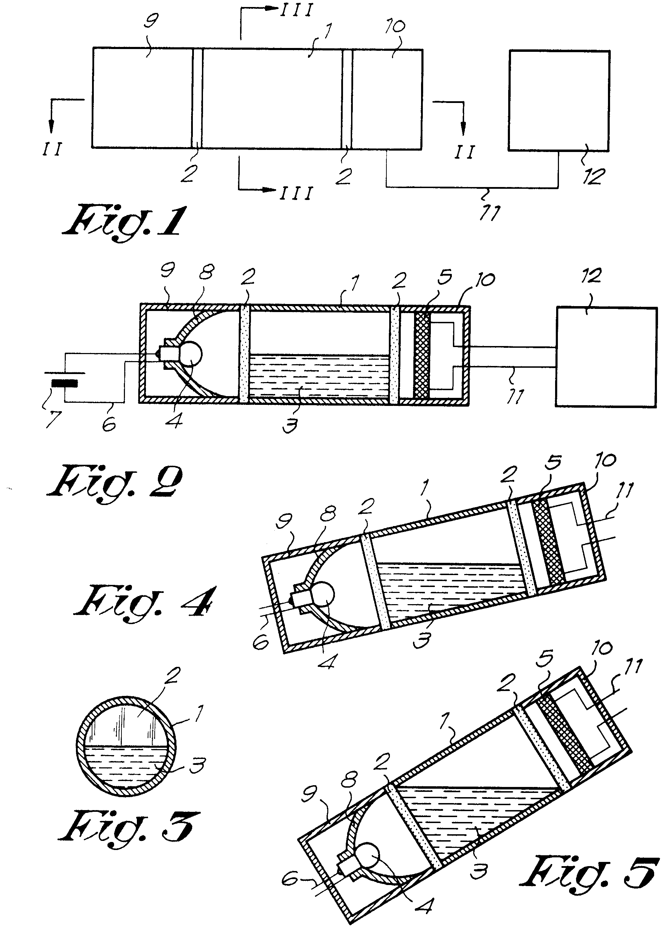

The device shown in figures 1 to 6 principally comprises an elongated closed receptacle 1, 2 which is half filled with a coloured liquid 3, a lamp 4 opposite one extremity thereof and a phototransistor 5 opposite the other extremity thereof.

The receptacle 1, 2 consists of a round tube 1 of opaque material, for example plastic and two extremities 2 of material which lets through light, for example glass or translucent plastic, which hermetically close off the tube 1 at both extremities.

The lamp 4 is an ordinary light bulb which is connected in an electric circuit 6 in which a power source 7 is also connected. The lamp 4 is mounted in a hollow reflector 8 of which the diameter corresponds to the diameter of the tube 1 and which reflects the light from the lamp 4 over the entire section of the tube 1 in this tube. The lamp 4 and the reflector 8 are mounted together in a chamber 9 which forms the extension of the tube 1.

The phototransistor 5 has a light sensitive side which is a big as the section of the tube 1. This phototransistor 5 is disposed on the outside of an extremity 2 in a chamber 10 which likewise forms the extension of the tube 1. The phototransistor 5 is connected in an electric circuit 11 in which a converter 12 is also connected. The phototransistor 5 sends a current in the circuit 11 which is proportional to the amount of light received, which current is converted in the converter 12 into an indication of the angle at which the receptacle 1, 2 is inclined in relation to the horizontal.

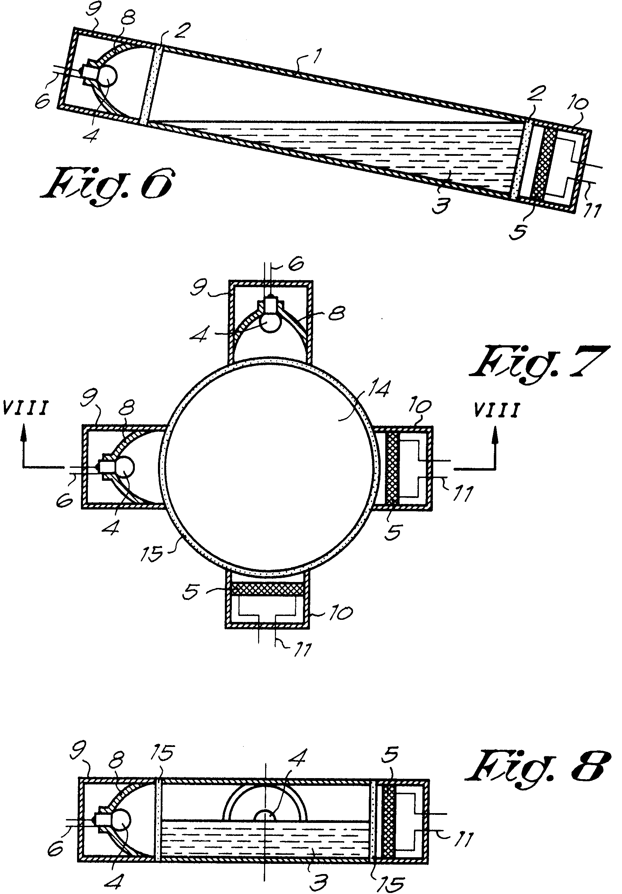

It is clear that the amount of light which the phototransistor 5 receives depends upon the inclination of the receptacle 1, 2. In horizontal position as shown in figure 2 half the light emitted by the lamp 4 can reach the phototransistor 5 unhindered. The other half is partly or completely absorbed by the coloured liquid 3. When the receptacle 1, 2 takes on an inclination as shown in figure 4, because of the fact that the surface area of the liquid 3 remains horizontal under the influence of gravity, more than half the extremity 2 on the side of the lamp 4 is covered with liquid and therefore a smaller amount of light can reach the phototransistor 5 unhindered. As can clearly be determined by comparing figures 5 and 6 the greater the inclination of the receptacle 1, 2 in the manner shown in these figures the smaller the amount of light which is not hindered by liquid 3.

Through calibration,'this is the measurement of known inclinations, the relationship between the current generated by the phototransistor 5 and the inclination is known. In this manner on the basis of the current generated by the phototransistor 5 the absolute value can then be given by the converter 12 of the angle which the longitudinal direction of the receptacle makes with the horizontal.

The sensitivity of the device depends upon the dimensions and the form of the receptacle 1, 2. In figure 6 a longer receptacle is shown than in figures 1 to 5. It is clear that with a longer receptacle the position whereby the extremity 2 on the side of the lamp 4 is completely free of liquid, as shown in figure 6, or conversely is completely covered with liquid, is already reached with a smaller inclination in one respectively the other direction of the receptacle 1, 2 than with a shorter receptacle.

Of course the permeability for the light of the liquid also has an effect on the measurement. The more light permeable the liquid is, the slower the amount of light which the phototransistor 5 receives, changes in function of the inclination. For a similar form and similar dimensions greater inclinations can be measured with a fairly transparent liquid than with a strongly absorbent liquid.

The higher the viscosity of the liquid 3 the less quickly the device reacts to a change of inclination. An aqueous solution as liquid reacts faster and is much more sensitive to vibrations than an oil.

The sensitivity of the device can then, through the use of a very long receptacle 1, 2 and a little viscous liquid 3 be selected so great that the very smallest inclination changes such as vibrations can be detected. Such a device is shown in figure 9. This device can be used as seismograph.

The device according to figures 1 to 6 and 9 can only measure the inclination or detect inclination changes which the longitudinal direction of the tube 1 makes with the horizontal, this is therefore the inclination in one single vertical plane by this longitudinal direction. By placing a second device with the longitudinal direction of its tube 1 directed perpendicular to the longitudinal direction of the tube 1 of the first device, the inclination in all directions can be determined. In particular not only the inclination of the axis of the receptacle 1, 2 can be determined but also its torsion or twisting about this axis.

An interesting application of the latter is the determination of the inclination and the twisting about its axis of a drilling head which is steerably moved in the ground. As shown in figure 10 two of the above described devices are mounted in the body 13 of this drilling head with their longitudinal directions perpendicular to each other.

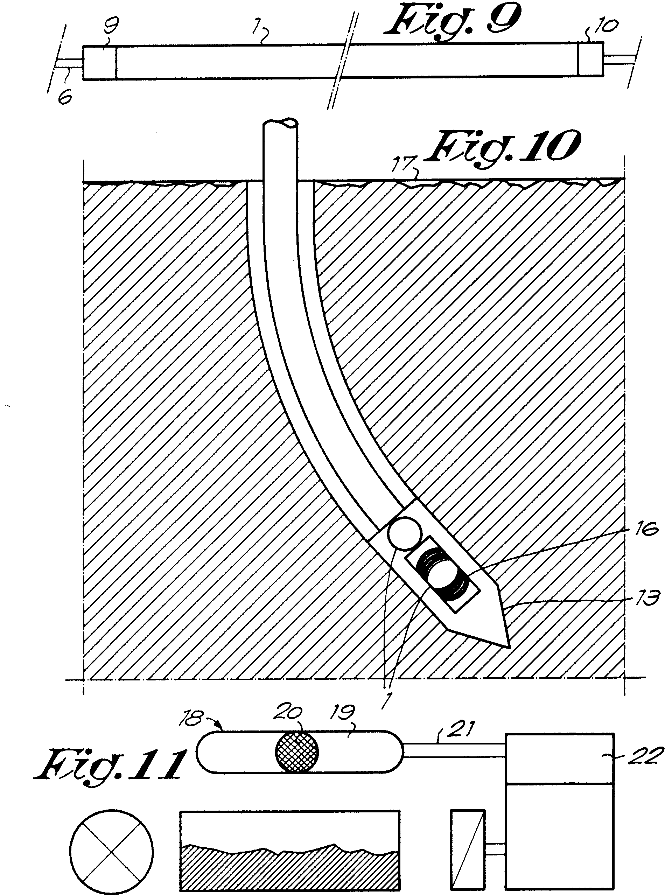

The embodiment of the invention shown in figures 7 and 8 offers the same possibility with one and the same device.

In this embodiment the receptacle is not elongated but it has the form of a round box. It is formed by two opaque round parallel walls 14 and an annular light permeable connecting wall 15 which connects the two walls 14 to each other. The device comprises two lamps 4 which are moved through 90 degrees in relation to each other over the periphery of the receptacle 14, 15 and are mounted in analogue manner as with the first embodiment in a reflector 8 in a chamber 9. Diametrically opposed to each of the lamps 4 a phototransistor 5 is mounted in the same manner as with the first embodiment.

In order to measure the inclination of the object or to detect inclination changes it is sufficient to mount one of the above described devices on this object. If a device is mounted as shown in figures 1 to 6 then the receptacle 1, 2 is placed with its axis parallel to the direction of the object of which the inclination has to be determined.

The above described devices permit the inclination or an inclination change to be measured in magnitude but give no indication about the direction of the inclination. From figures 4 and 5 it can be deduced that the amount of light let through that reaches the phototransistor 5 is just the same as when the tube 1 does not incline upwards in the direction of the phototransistor 5 as is shown in these figures, but inclines at a same angle downwards.

In order to verify whether the inclination is upwards rather than downwards, the device according to the embodiment shown in figure 11 has a mercury switch 18 which is mounted on the tube 1. For the rest the device is identical to that shown in figures 1 to 6. The mercury switch consists of an elongated electrically nonconductive small tube 19 which is attached with its longitudinal direction for example parallel to the tube 1 there on and a mercury globule 20 which is movable in the small tube 19 under the influence of gravity. On one or both extremities of the small tube 19 two electrical contacts 21 are mounted which connect to an indicating device 22 via conductors. When the mercury switch 18 inclines downwards in the direction of these contacts 21 the mercury globule 20 flows through gravity towards the corresponding extremity of the small tube 19 and puts the contacts 21 in electrical contact with each other.

The device can be utilised for determining the inclination of a drilling head driven into the ground, as shown in figure 10. As already mentioned through the use of two devices of the type shown in figures 1 to 6 directed perpendicular to each other both the inclination of the axis and the twisting of the drilling head about this axis can be determined. By furthermore installing two coils 16 round the tube 1 of the device which is directed parallel to the axis of the drilling head and placing a conductor 17 on the ground through which electrical impulses are sent, the correct. direction of the drilling head, this is the deviation in relation to the longitudinal direction of the conductor 17 can also be determined.

The turns of the two coils 16 are directed for example perpendicular to each other. Because of the current through the conductor 17 a circular magnetic field is created through which a charge develops in the coils 16. The difference in charge between the two coils 16 depends upon the deviation of the tube 1 in relation to the conductor 17.

The device can also be used as antitheft device or alarm device for vehicles. When a person exerts force on the vehicle or sits in the vehicle, because of the fact that the vehicle rests on the wheels by means of springs, this necessarily results in a change of inclination of this vehicle, which change can be detected by a device mounted on the vehicle.

A totally different application of the device, which is based on the inertia of the liquid in the receptacle 1, 2 or 14, 15 consists in the detection of a variation of speed, for example the starting or braking of a vehicle on which the device is mounted. Through inertia the liquid will react more slowly to the change in speed than the receptacle through which this liquid will accumulate at one extremity of the receptacle and the level will therefore increase at this extremity. This influences the amount of light which can pass through the receptacle, which is detected by the phototransistor 5.

The above described devices are of very simple construction and can be produced very compact. Nevertheless they can permit a very accurate measurement of the inclination whereby the accuracy or the sensitivity of the device can be adapted through the choice of the form and dimensions and the nature of the liquid.

The above described devices comprise no moving parts and therefore show no mechanical wear and tear. They are also totally insensitive to external, magnetic and electric fields, which is especially important for the application in drilling heads.

The present invention is in no way restricted to the embodiments described above and within the scope of the present patent application many changes can be applied to the described embodiments, among others with regard to the form, the assembly, the arrangement and the number of the parts which are used for the realisation of the invention.

In particular the light source need not necessarily be a light bulb. It can also be a light giving diode or a halogen lamp. It can also be formed by the extremity of a fibreglass filament through which light is diffused. The light recording instrument need also not necessarily be a phototransistor. It can for example be a light sensitive resistance or a so-called CCD (Charge Couple Device).

The radiation for that matter need not necessarily be light. It can for example also be an infrared radiation.

In the embodiment whereby the receptacle is tubular this tube need not necessarily be round. Also in the embodiment whereby the receptacle is box-shaped this need not necessarily be round. In the last case the number of pairs of radiation source-radiation recording instrument. need not. necessarily be limited to two.

The receptable need also not necessarily be half filled with liquid. More or less liquid can be present which will of course have an effect on the sensitivity of the measurement or measurement range.

It is also possible to influence the behaviour of the liquid and therefore of the device through the installation of mechanical parts in the receptacle. In this way for example by placing compartments it can be ensured that the device only reacts when the inclination exceeds a specific minimum.

## Claims

**1.-** Device for measuring an inclination and/or detecting or measuring a variation in inclination or speed, which device comprises a receptacle (1, 2; 14, 15) which is partly filled with liquid (3), characterised in that the receptacle (1, 2; 14, 15) comprises at least a pair of wall parts (2; 15) located opposite each other which let through radiation, the liquid is a liquid (3) which at least obstructs part of this radiation and the device comprises a radiation source (4) which is disposed stationary in relation to the receptacle (1, 2; 14, 15) opposite at least one of the wall parts (2; 15) and a radiation recording instrument (5) which is disposed stationary in relation to the receptacle (1, 2; 14, 15) opposite the opposite wall part (2; 15) of the receptacle (1, 2; 14, 15), which radiation recording instrument (5) gives a signal in function of the recorded radiation.

**2.-** Device according to the preceding claim, characterised in that the receptacle (1, 2; 14, 15) is tubular and the extremities (2) let through radiation.

**3.-** Device according to one of the preceding claims characterised in that the radiation source (4) is a light source and the radiation recording instrument (5) a light recording instrument, while the wall parts (2; 15) which let through radiation are wall parts which let through light.

**4.-** Device according to claims 2 and 3, characterised in that a reflector (8) is disposed opposite one extremity (2), which lets through light, of the tubular receptacle (1, 2) and the light source (4) is located between this extremity (2) and the reflector (8).

**5.-** Device according to one of the claims 3 and 4, characterised in that the liquid (3) is light absorbing because of the fact that it is coloured.

**6.-** Device according to one of the claims 3 to 5, characterised in that the light recording instrument (5) is one of the components formed by a light sensitive resistance, a phototransistor and a so-called charge Couple Device.

**7.-** Device according to any of the preceding claims, characterised in that it comprises at least two wall parts (15) which let through radiation disposed opposite each other, two radiation sources (4), one opposite a wall part (15) of each pair and two radiation recording instruments (5), one opposite the other wall part (15) of each pair.

**8.-** Device according to the preceding claim, characterised in that the two radiation sources (4) are moved through 90 degrees round the periphery of the receptacle (14, 15) in relation to each other.

**9.-** Device according to any of the preceding claims, characterised in that the receptacle (14, 15) is formed by two parallel walls (14) and a connecting wall (15) which at least locally lets through radiation and connects these to each other over the entire periphery of the aforementioned walls (14) and forms all the wall parts which let through radiation.

**10.-** Device according to any of the preceding claims, characterised in that it is mounted in a steerable drilling head.

**11.-** Device according to any of the claims 1 to 9, characterised in that it forms a vibration detector.

**12.-** Device according to any of the claims 1 to 9, characterised in that it is mounted in a vehicle as antiheft device.

**13.-** Device according to any of the preceding claims, characterised in that it comprises a mercury switch (18) which is mounted on the receptacle (14, 15) in order to determine the direction of the inclination.
